# EUROPÄISCHE PATENTSCHRIFT

(11) **EP 2 892 629 B1**
(45) Veröffentlichungstag und Bekanntmachung des Hinweises auf die Patenterteilung: **17.06.2020**
(21) Anmeldenummer: 13753138.0
(22) Anmeldetag: 16.08.2013
(51) Int. Cl.: B01D 39/16

(54) **FILTERELEMENT**
FILTER ELEMENT
ELEMENT FILTRANT

(30) Priorität: 07.09.2012 DE 102012215877
(43) Veröffentlichungstag der Anmeldung: 15.07.2015
(73) Patentinhaber: Mahle International GmbH, 70376 Stuttgart (DE)
(72) Erfinder: DISSON, Ralf, 71397 Leutenbach (DE); LAY, Hannes, 72660 Beuren (DE); NEUBAUER, Bernd, 73635 Rudersberg (DE); RENZ, Birgit, 71672 Marbach (DE); STEPPE, Markus, 71272 Malmsheim (DE)
(74) Vertreter: BRP Renaud & Partner mbB Rechtsanwälte Patentanwälte Steuerberater
(86) Internationale Anmeldenummer: PCT/EP2013/067103
(87) Internationale Veröffentlichungsnummer: WO 2014/037205

(56) Entgegenhaltungen:
- EP-A2- 1 911 960
- DE-A1-102009 050 447
- DE-T2- 60 111 554
- US-A1- 2003 150 199
- US-A1- 2005 061 723

## Beschreibung

Die vorliegende Erfindung betrifft ein Filterelement für eine Filtereinrichtung, mit einem Filterkörper zum Filtern eines Fluids sowie eine solche Filtereinrichtung.

Filtereinrichtungen werden in zahlreichen Anwendungen eingesetzt, um unterschiedliche Fluide zu reinigen. Von besonderem Interesse sind dabei insbesondere Fahrzeuganwendungen. Hierzu weist eine solche Filtereinrichtung üblicherweise ein Filterelement auf, welches das Fluid filtert bzw. von Verunreinigungen, Schmutzpartikel und dergleichen trennt. Ein derartiges Filterelement kann zur Reinigung einer Flüssigkeit, insbesondere von Öl oder Wasser, eingesetzt bzw. zum Filtern eines Gases wie etwa Luft verwendet werden. Das Filterelement weist hierbei einen Filterkörper auf, der aufgrund seiner strukturellen Ausbildung bzw. physikalischen und/oder chemischen Eigenschaften die Filterung des Fluids erlaubt. Der Filterkörper kann aus zumindest einem Filtermaterial ausgebildet sein bzw. zumindest ein solches Filtermaterial aufweisen, welches insbesondere besagte strukturelle, physikalische und/oder chemische Eigenschaften aufweist. Zudem ist es prinzipiell vorstellbar, den Filterkörper bzw. das Filtermaterial mit Poren zu versehen bzw. einen Poren aufweisenden Filterkörper zu wählen, um eine Durchströmung des Fluids durch den Filterkörper hindurch zu ermöglichen und Verunreinigungen bzw. Schmutzpartikel aus dem Fluid auszusieben bzw. zu filtern.

Ferner ist es vorstellbar, das Filterelement mit einer Nanofaserschicht zu versehen, um insbesondere die Filtereigenschaften des Filterelementes zu verbessern. Nachteilig bei einem derartigen Filterelement ist insbesondere, dass die Nanofaserschicht bei starken Strömungsgeschwindigkeiten des Fluids eine unzureichende Stabilität aufweist, so dass Schmutzpartikel bzw. Verunreinigung des Fluids zu einer Beschädigung der Nanofaserschicht und/oder des Filterkörpers führen können.

Aus DE 10 2009 050447 A1 und EP 1 911 960 A2 sind jeweils Filterelemente mit zwei voneinander abgewandten Seiten bekannt, von denen eine mit einer Nanofaserschicht versehen ist.

Die vorliegende Erfindung beschäftigt sich mit dem Problem, für ein Filterelement der eingangs genannten Art sowie für eine Filtereinrichtung mit einem solchen Filterelement verbesserte oder zumindest andere Ausführungsformen anzugeben, die sich insbesondere durch eine erhöhte Stabilität auszeichnen. Zudem soll eine preisgünstige Herstellung gewährleistet sein.

Das genannte Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, eine Nanofaserschicht eines Filterelementes auf eine Seite eines Filterkörpers des Filterelements aufzubringen, die bessere Trägereigenschaften für die Nanofaserschicht aufweist, um somit eine erhöhte Stabilität der Nanofaserschicht zu erreichen und/oder ein verbessertes Aufbringen der Nanofaserschicht auf den Filterkörper zu gewährleisten. Das Filterelement kann eine beliebige Form aufweisen. Vorzugsweise weist das Filterelement eine rechteckige, runde, ovale oder hufeisenförmige Kontur auf. Bei anderen Ausgestaltungen kann das Filterelement auch als Wickelfilter mit wechselseitig verschlossenen Kanälen ausgebildet sein. Hierbei umfasst das Filterelement besagten Filterkörper, der dem Filtern eines Fluids dient und zumindest ein Filtermaterial umfasst. Ferner weist der Filterkörper bzw. das Filtermaterial eine Porosität auf. Das heißt, dass der Filterkörper Hohlräume wie beispielsweise Poren aufweist, wobei die Porosität das Verhältnis zwischen Hohlraumanteil und Gesamtanteil des Filterkörpers angibt. Zudem ist der Filterkörper erfindungsgemäß derart ausgebildet, dass die Porosität auf einer ersten Seite des Filterkörpers kleiner ist als auf einer von der ersten Seite abgewandten zweiten Seite des Filterkörpers. Mit anderen Worten: Der Hohlraumanteil des Filterkörpers ist auf der ersten Seite kleiner als auf der zweiten Seite, womit die erste Seite kompakter und insbesondere dichter sowie stabiler ist als die zweite Seite. Erfindungsgemäß ist die Nanofaserschicht auf die erste Seite und somit auf die Seite mit dem kleineren Hohlraumanteil des Filterkörpers aufgebracht. Dies führt einerseits dazu, dass die Nanofaserschicht, insbesondere im Vergleich zu einer Aufbringung auf der zweiten Seite, einen besseren Halt hat bzw. vom Filterkörper besser abgestützt ist. Somit kann die Nanofaserschicht einer stärkeren Strömung und somit Verunreinigungen bzw. Schmutzpartikeln mit einem höheren Impulsen standhalten. Zudem bietet die die kleinere Porosität aufweisende erste Seite bessere Bedingungen zum Aufbringen der Nanofaserschicht, so dass auf dieser Seite ein verbessertes Aufbringen der Nanofaserschicht und/oder das Aufbringen einer solchen Nanofaserschicht mit einer erhöhten Stabilität möglich ist.

Die geringere Porosität der ersten Seite im Vergleich zur zweiten Seite des Filterkörpers bedeutet üblicherweise auch, dass die Dichte des Filterkörpers auf der ersten Seite größer ist als auf der zweiten Seite. Dies gilt insbesondere dann, wenn der Filterkörper lediglich ein solches Filtermaterial aufweist. Der Filterkörper kann jedoch auch zwei oder mehr unterschiedliche Filtermaterialien bzw. Materialzusammensetzungen aufweisen. Hier bedeutet die niedrigere Porosität der ersten Seite nicht zwangsläufig, dass die erste Seite eine höhere Dichte aufweist als die zweite Seite, insbesondere dann, wenn der Filterkörper auf der ersten Seite ein leichteres Filtermaterial bzw. ein Filtermaterial mit einer geringeren Dichte aufweist als auf der zweiten Seite.

Die Porosität des Filterkörpers bedeutet, wie zuvor erwähnt, dass der Filterkörper bzw. das zumindest eine Filtermaterial Hohlräume aufweist. Diese Hohlräume können insbesondere in Form von Poren vorliegen, die nachfolgend als Körperporen bezeichnet werden. Besagte Körperporen können hierbei beliebig im Filterkörper verteilt sein, sofern die erste Seite eine kleinere Porosität aufweist als die zweite Seite. Zudem können die jeweiligen Körperporen unterschiedliche Größen und/oder Formen aufweisen. So können die Körperporen insbesondere als Mikroporen ausgebildet sein, die Dimensionen im ein- bis zweistelligen Mikrometerbereich aufweisen.

Die niedrigere Porosität des Filterkörpers auf der ersten Seite im Vergleich zur zweiten Seite kann beispielsweise dadurch gegeben sein, dass eine Durchschnittsgröße der Körperporen des Filterkörpers an der ersten Seite kleiner ist als die Durchschnittsgröße der Körperporen an der zweiten Seite. Das heißt insbesondere, dass die Körperporen bzw. Hohlräume auf der ersten Seite kleiner sind als auf der zweiten Seite. Alternativ oder zusätzlich kann die Anzahl der Körperporen auf der ersten Seite geringer sein als auf der zweiten Seite. Bei gleichmäßiger Durchschnittsporengröße ist also insbesondere eine Körperporendichte des Filterkörpers auf der ersten Seite kleiner als auf der zweiten Seite.

Die geringere Porosität des Filterkörpers auf der ersten Seite im Vergleich zur zweiten Seite führt dabei bevorzugt dazu, dass die erste Seite glatter bzw. flacher ausgebildet ist als die zweite Seite. Die glattere bzw. flachere Ausbildung der ersten Seite, welche insbesondere zu einer erhöhten Kompaktheit der ersten Seite führen kann, stellt verbesserte Bedingungen für das Aufbringen der Nanofaserschicht auf der ersten Seite dar und/oder stütz die Nanofaserschicht besser ab.

Das erfindungsgemäße Filterelement kann beliebig in einer zugehörigen Filtereinrichtung angeordnet und beliebig von einem zu filternden Fluid durchströmt werden. Bevorzugt sind jedoch diejenigen Ausführungsformen, bei denen die erste Seite der von dem zu filternden Fluid angeströmten Seite entspricht. Mit anderen Worten: Die erste Seite entspricht im in der Filtereinrichtung angeordneten Zustand einer von dem zu filternden Fluid angeströmten Rohseite der Filtereinrichtung. Dementsprechend kann die zweite Seite einer Reinseite entsprechen, aus der das gefilterte Filtermedium ausströmt. In diesem Fall kann aufgrund der niedrigeren Porosität der ersten Seite, insbesondere wenn die erste Seite eine im Vergleich zur zweiten Seite höhere Dichte aufweist, von einem Oberflächenfilter gesprochen werden, bei dem das Filtern des Fluids vorwiegend auf der ersten Seite stattfindet. Das heißt, dass die Schmutzpartikel bzw. Verunreinigungen des zu filternden Fluids vorwiegend auf der ersten Seite bzw. im Bereich der ersten Seite aus dem Fluid gefiltert bzw. ausgeschieden werden und sich hier absetzen. Dementsprechend kann das Filterelement zum Beispiels mittels Rückspülung dadurch gereinigt werden, dass es von einem Fluid mit umgekehrter Strömungsrichtung durchströmt wird. Dieses Fluid, das als Reinigungsfluid bezeichnet werden kann, strömt also an der ersten Seite aus dem Filterelement aus, so dass besagte Verunreinigungen bzw. Schmutzpartikel aus dem Filterelement herausgespült werden können. Damit ist es möglich, die Lebensdauer des Filterelements zu erhöhen bzw. eine Filterwirkung des Filterelements zu verbessern.

Selbstverständlich ist es auch möglich, das Filterelement derart in der zugehörigen Filtereinrichtung anzuordnen, dass es als ein Tiefenfilter fungiert, bei dem die erste Seite der Reinseite entspricht, während die zweite Seite der Rohseite entsprechen kann. In diesem Fall ist jedoch besagte Reinigung mittels Rückspülung erschwert.

Die niedrigere Porosität des Filterkörpers auf der ersten Seite im Vergleich zur zweiten Seite kann insbesondere dadurch gegeben sein, dass die Porosität entlang des Filterkörpers, insbesondere entlang einer Durchströmungsrichtung des zu filternden Fluids, variiert. Hierbei sind prinzipiell sämtliche Variationen innerhalb des Filterkörpers vorstellbar, sofern die Porosität auf der ersten Seite kleiner ist als auf der zweiten Seite. So kann die Porosität des Filterkörpers von der ersten Seite hin zur zweiten Seite zumindest bereichsweise stufenartig zunehmen. Dies kann insbesondere dadurch bedingt sein, dass der Filterkörper aus zwei oder mehreren Filtermaterialien mit unterschiedlichen Porositäten mehrschichtig oder mehrlagig hergestellt ist. Hierbei ist es insbesondere vorstellbar, dass die Porosität des Filterkörpers innerhalb des Filterkörpers größer ist als auf der zweiten Seite. Ferner kann die Porosität des Filterkörpers innerhalb des Filterkörpers kleiner sein als auf der ersten Seite. Die stufenartige Änderung der Porosität des Filterkörpers ist beispielsweise durch eine entsprechende stufenartige Änderung der Durchschnittsgröße und/oder Anzahl der Körperporen des Filterkörpers von der ersten Seite hin zur zweiten Seite gegeben. Auch kann die stufenartige Änderung der Porosität durch Zugabe von Filterpartikeln in den Filterkörper bedingt sein, wobei als Beispiel für derartige Filterpartikel auf Kohlepartikel bzw. Aktivkohlepartikel hingewiesen wird. Auch kann die stufenartige Änderung der Porosität des Filterkörpers von der Herstellung des Filterkörpers abhängen. So ist es vorstellbar, dass der Filterkörper aus den gleichen oder unterschiedlichen Filtermaterialien in zwei oder mehreren Schritten hergestellt wird, wobei der jeweilige Übergang zwischen den Herstellungsschritten zu einer solchen stufenartigen Variation der Porosität des Filterkörpers führt.

Alternativ kann die Porosität des Filterkörpers von der ersten Seite hin zur zweiten Seite zumindest bereichsweise kontinuierlich variieren. Das heißt, dass die Porosität des Filterkörpers innerhalb des Filterkörpers zumindest bereichsweise graduell ab- oder zunimmt, sofern die Porosität auf der ersten Seite kleiner ist als auf der zweiten Seite.

Eine solche kontinuierliche Änderung der Porosität kann insbesondere mit der Herstellung des Filterkörpers, insbesondere des zumindest einen Filtermaterials, zusammenhängen. Als eine derartige Herstellung kommt beispielsweise ein Sieben oder Schöpfen des Filtermaterials aus dem zugehörigen Filtergrundmaterial in Frage. Hierbei kann das Filtermaterial aus einer das Filtergrundmaterial enthaltenden Filtermaterialflüssigkeit geschöpft bzw. ausgesiebt werden. Bei anderen Ausführungen kann das Filtermaterial aus einem Filtermaterial-Gasgemenge hergestellt sein. Dies kann z. B. durch ein Ablegen des Filtermaterialgemisches auf ein Siebband erfolgen. Bei derartigen Verfahren strömt die Filtermaterialflüssigkeit bzw. Filtermaterial-Gasgemenge insbesondere gravitationsbedingt und/oder durch Unterdruck bzw. Absaugung in einer Richtung, womit sich auf der entsprechenden Seite mehr Filtermaterial ansammeln kann als auf der gegenüberliegenden Seite. Dies führt dazu, dass eine Seite einen höheren Anteil an Filtermaterial aufweist als die andere Seite, was zu unterschiedlichen Porositäten innerhalb des Filtermaterials führt. Hierbei nimmt die Porosität gewöhnlich kontinuierlich ab bzw. zu, wobei die Seite mit der niedrigeren Porosität der ersten Seite des Filterkörpers entspricht. Ein derartiges Verfahren kann auch in nacheinanderfolgenden Schritten erfolgen, was zu einer zuvor erwähnten stufenartigen Änderung der Porosität des Filterkörpers führen kann. Eine solche stufenartige Änderung der Porosität kann auch dadurch gegeben sein, dass der Filterkörper zwei oder mehrere Filtermaterialien mit unterschiedlichen Porositäten aufweist, wobei die Porosität innerhalb der jeweiligen Filtermaterialien insbesondere wie oben beschrieben variieren oder gleichmäßig bzw. konstant sein kann.

Grundsätzlich kann der Filterkörper aus einem beliebigen solchen Filtermaterial hergestellt sein und/oder eine beliebige Größe und/oder Form aufweisen. So kann der Filterkörper durch Falten hergestellt und/oder asymmetrisch ausgebildet sein. Auch kann der Filterkörper, insbesondere das Filtermaterial imprägniert sein und/oder eine glatte, genockte, genoppte oder rillierte Struktur aufweisen. Weist der Filterkörper eine rillierte Struktur auf, so weisen die jeweiligen Rillen eine beliebige Tiefe auf, wobei Ausführungsformen bevorzugt sind, bei denen die Rillentiefe größer als 0,4 mm ist. Hierbei ist die Reihenfolge der einzelnen Arbeitsschritte zur einer derartigen Gestaltung des Filterkörpers bzw. des jeweiligen Filtermaterials beliebig.

Bei bevorzugten Ausführungsformen ist der Filterkörper aus einem faserhaltigen Material hergestellt. Das heißt insbesondere, dass das zumindest eine Filtermaterial dem faserhaltigen Material entspricht. Ein derartiger Filterkörper ist vorzugsweise mit besagtem Verfahren aus einer zugehörigen Filtermaterialflüssigkeit geschöpft bzw. gesiebt. Alternativ kann der Filterkörper aus einem Filtermaterial hergestellt sein, welches als flächiges Bahnenmaterial ausgebildet ist und plissiert werden kann. Ein derartiges Bahnenmaterial ist typischerweise als Rollenware für die Filterproduktion erhältlich.

Hierbei können beliebige faserhaltige Materialien zum Einsatz kommen, wobei der Filterkörper bzw. das Filtermaterial bei besonders bevorzugten Ausführungsformen aus einem zellulosehaltigen Material hergestellt ist bzw. das zumindest eine Filtermaterial einem zellulosehaltigen Material entspricht. Es sind jedoch auch Ausführungsformen vorstellbar, bei denen der Filterkörper aus einem Fasergemisch aus Zellulose und/oder synthetischen Fasern hergestellt ist. Alternativ oder zusätzlich kann der Filterkörper bzw. das Filtermaterial auch Glasfaser und dergleichen aufweisen bzw. aus Glasfasern hergestellt sein. Gemäß weiteren Ausgestaltungen kann das Filtermaterial aus einem Polymerschaum gebildet sein.

Die vorstehend beschriebenen Filtermaterialien können neben dem Grundmaterial auch über Beimengungen anderer Stoffe verfügen. Die Beimengungen können als Fasern oder Partikel ausgeführt sein, wobei die Beimengungen aus Kunststoff, Glas, Grafit, Ceolite oder mineralischen Stoffen bestehen können. Bei einem aus dem faserhaltigen Material hergestellten Filterkörper bzw. bei einem faserhaltigen Filtermaterial hat das Aufbringen der Nanofaserschicht auf der ersten Seite insbesondere den Vorteil, dass auf dieser Seite eine im Vergleich zur zweiten Seite niedrigere Anzahl von Faserenden des Filterkörpers vorhanden ist. Bei diesen Faserenden handelt es sich dabei insbesondere um freie Faserenden, die zu einer Schädigung der Nanofaserschicht führen, indem sie beispielsweise in die Nanofaserschicht eindringen bzw. diese durchdringen. Dem wird also erfindungsgemäß entgegengewirkt, indem die Nanofaserschicht auf die Seite des Filterkörpers mit der niedrigeren Porosität, also auf der ersten Seite, und dementsprechend mit der verringerten Anzahl von Faserenden aufgebracht wird.

Zur Reduzierung der Faserenden kann das Filtermaterial, insbesondere auf der ersten Seite, vorzugsweise vor dem Aufbringen der Nanofaserschicht vorbehandelt werden bzw. sein. Eine solche Vorbehandlung kann beispielsweise das Ätzen des faserhaltigen Filtermaterials beinhalten. Alternativ oder zusätzlich kann eine Säurebehandlung erfolgen. Hierbei kann zusätzlich zur Reduzierung der Anzahl der Faserenden eine Abrundung der Fasern und somit eine Milderung bzw. Entschärfung bzw. Entgratung der Ecken und/oder Kanten der Fasern erreicht werden. Auch ein Abflammen bzw. Absengen der Faserenden kann zur Reduzierung der Anzahl von Faserenden beitragen

Die reduzierte Anzahl von Faserenden kann ebenso dadurch realisiert sein, das an der ersten Seite ein anderes Filtermaterial zum Einsatz kommt als auf der zweiten Seite. Dabei wird das Filtermaterial derart gewählt, dass an der ersten Seite weniger Faserenden vorhanden sind.

Insbesondere kann vorgesehen sein, dass an der ersten Seite ein Filtermaterial verwendet wird, das weichere und stärker abgerundete Fasern, insbesondere Faserenden, aufweist.

Auch kann an der ersten Seite ein Filtermaterial mit Filament verwendet werden. Die Länge eines solchen Filaments hat insbesondere zur Folge, dass die Anzahl der Fasern und somit der Faserenden reduziert ist. Dabei kann ein beliebiges Filament zum Einsatz kommen. Als Beispiele hierfür wird auf Endlosfasern sowie Spunbond verwiesen.

Auch eine geeignete Herstellung des faserhaltigen Filtermaterials kann zur Reduzierung der Anzahl von freien bzw. herausragenden Faserenden beitragen. Hierzu zählt etwa der Einsatz eines Pressvorgangs, um beispielsweise ein Trägerpapier des Filterkörpers bzw. des Filtermaterials die Produktion des Filtermaterials zu behandeln.. Dabei wird also ein Filtermaterial mit zumindest einer glatten Seite hergestellt, so dass das Filtermaterial weniger Faserenden bzw. freie Faserenden aufweist. Weiterhin kann bei einem Wickelvorgang während der Herstellung des Filtermaterials, insbesondere der Fasern, eine Trennlage verwendet werden, um eine Beschädigung der Fasern zu vermeiden.

Bei einer weiteren Variante trägt die geeignete Wahl eines Fasermaterials zur Reduzierung der Faserenden bei. Dies kann beispielsweise durch die Wahl eines Fasermaterials erreicht werden, das ein vergleichsweise zähes Harz aufweist.

Ferner ist es vorstellbar, auf der ersten Seite eine faserhaltige Deckschicht aufzubringen, auf der anschließend die Nanofaserschicht aufgebracht wird. Die Deckschicht führt insbesondere dazu, dass die Struktur der ersten Seite insgesamt glatter wird und somit weniger Faserenden aufweist. Die Deckschicht kann hierbei ihrerseits faserhaltig sein, wobei die Fasern der Deckschicht nicht zwingend funktionell ausgestaltet sind und beispielsweise nicht zum Filtervorgang beitragen müssen. Ebenso ist es vorstallbar, dass die Deckschicht faserfrei ist. Bei dieser Variante kann die Deckschicht beispielsweise Lack und/oder Harz und/oder ein Klebemittel enthalten.

Die Nanofaserschicht weist im Allgemeinen eine beliebige Art von Fasern bzw. Nanofasern auf, sofern die jeweiligen Nanofasern der Nanofaserschicht eine entsprechende Dimension und insbesondere einen Durchmesser von bis zu einigen hundert Nanometern, bevorzugt weniger als 500 nm, aufweisen. Ferner ist die Nanofaserschicht nicht zwangsläufig auf der gesamten ersten Seite des Filterkörpers aufgebracht. So sind beispielsweise Ausführungsformen vorstellbar, bei denen mehrere voneinander getrennte bzw. voneinander entfernte Nanofaserschichten auf der ersten Seite des Filterkörpers aufgebracht sind. Hierbei können die jeweiligen voneinander getrennten Nanofaserschichten als Nanofaserteilchen bezeichnet werden, die beliebig auf der ersten Seite verteilt sein können, wobei Ausführungsformen bevorzugt sind, bei denen besagte Nanofaserteilchen homogen bzw. gleichmäßig auf der ersten Seite des Filterkörpers verteilt sind. Alternativ kann auch eine zusammenhängende Nanofaserschicht vorgesehen sein, welche das Filtermaterial in speziellen Bereichen nicht überdeckt. Hierbei können Aussparungen mit beliebiger Kontur oder nanofaserfreie Bereiche an den Rändern des Filterkörpers vorgesehen sein. Ferner können die jeweiligen Nanofaserteilchen eine beliebige Größe und/oder Form aufweisen. Insbesondere weisen die jeweiligen Nanofaserteilchen Größen im zweistelligen Mikrometerbereich auf und sind beispielsweise 50 µm lang und/oder breit.

Die Herstellung der Nanofaserschicht kann in allgemein bekannter Weise erfolgen. Dazu gehören beispielsweise das Elektrospinnen oder das Schmelzspinnen.

Auch die Nanofaserschicht bzw. die Nanofaserpartikel können eine Porosität aufweisen, wobei die Porosität der Nanofaserschicht bevorzugt kleiner ist als die Porosität des Filterkörpers und insbesondere als die Porosität des Filterkörpers auf der ersten Seite. Damit ist es insbesondere möglich, kleinere Verunreinigungen bzw. Schmutzpartikel aus dem zu reinigenden Fluid zu filtern als mit dem Filterkörper.

Die Porosität der Nanofaserschicht kann analog zur Porosität des Filterkörpers durch Poren der Nanofaserschicht gegeben sein, welche nachfolgend als Nanofaserporen bezeichnet werden. Hierbei sind Ausführungsformen bevorzugt, bei denen die Nanofaserporen der Nanofaserschicht kleiner sind als die Körperporen des Filterkörpers.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

### Es zeigen, jeweils schematisch

- Fig. 1: einen Schnitt durch eine Filtereinrichtung mit einem Filterelement,
- Fig. 2-5: jeweils einen Schnitt durch ein Filterelement, bei unterschiedlichen Ausführungsformen.

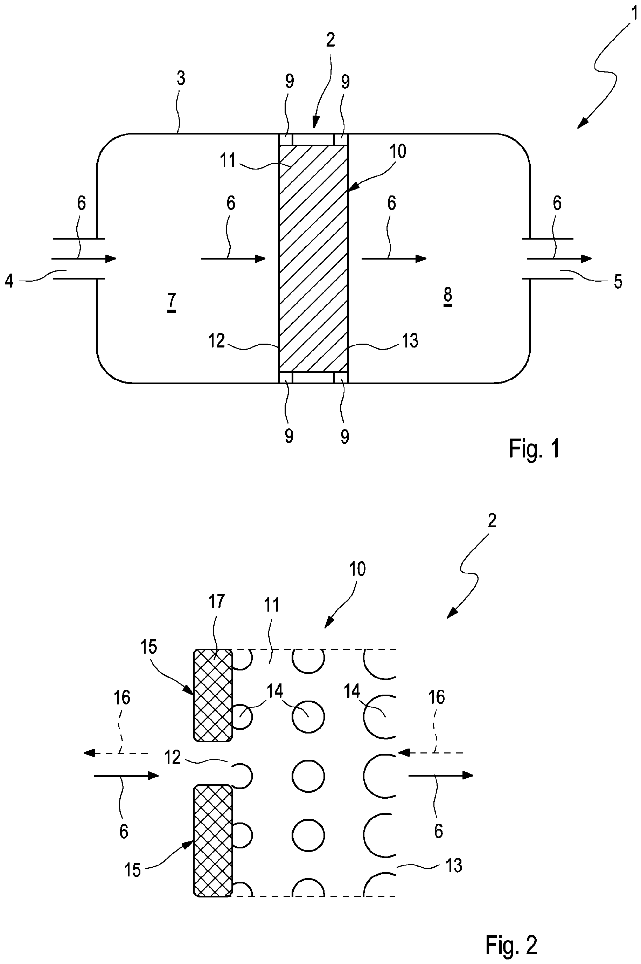

Figur 1 zeigt einen Schnitt durch eine Filtereinrichtung 1, die beispielsweise als Flüssigkeitsfilter zum Filtern von Wasser oder Öl oder als Gasfilter zum Filtern von Luft für ein Kraftfahrzeug ausgestaltet sein kann. Zum Filtern des jeweiligen Fluids weist die Filtereinrichtung 1 ein Filterelement 2 auf, das in einem Gehäuse 3 der Filtereinrichtung 1 angeordnet ist. Die Filtereinrichtung 1 weist ferner einen Fluideinlass 4 sowie einen Fluidauslass 5 auf, die auf gegenüberliegenden Seiten des Gehäuses 3 ausgebildet sind. Das zu filternde Fluid strömt, wie mit den Pfeilen 6 angedeutet, durch den Fluideinlass 4 in das Gehäuse 3 ein und trifft auf das Filterelement 2, wo es gefiltert wird und anschließend über den Fluidauslass 5 aus der Filtereinrichtung 1 gelangt. Somit wird die Filtereinrichtung 1 bzw. das Gehäuse 3 mittels des Filterelements 2 in zwei Bereiche aufgeteilt: Der dem Fluideinlass 4 benachbarte Bereich bildet eine Rohseite 7, während der dem Fluidauslass 5 benachbarte Bereich die Reinseite 8 bildet. Das Filterelement 2 ist mit Hilfe von Haltemitteln 9 im Gehäuse 3 gehalten bzw. fixiert, wobei die Haltemittel 9 fluiddicht ausgestaltet sind, so dass das zu reinigende Fluid lediglich durch das Filterelement 2 von der Rohseite 7 zur Reinseite 8 gelangen kann. Das Filterelement 2 weist einen Filterkörper 10 auf, welches aus zumindest einem Filtermaterial 11 ausgebildet ist bzw. dieses Filtermaterial 11 aufweist. Zudem ist eine erste Seite 12 des Filterelementes 2 bzw. des Filterkörpers 10 auf der Rohseite 7 angeordnet bzw. entspricht dieser, während eine von der ersten Seite 12 abgewandte zweite Seite 13 auf der Reinseite 8 angeordnet ist bzw. dieser entspricht. Das heißt, dass das zu filternde Fluid auf der ersten Seite 12 in das Filterelement 2 bzw. in den Filterkörper 10 einströmt und auf der zweiten Seite 13 aus dem Filterelement 2 bzw. dem Filterkörper 10 rausströmt, wobei die erste Seite 12 und die zweite Seite 13 des Filterkörpers 10 der ersten Seite 12 bzw. der zweiten Seite 13 des entsprechenden Filtermaterials 11 entspricht.

Die Figuren 2 bis 4 zeigen jeweils einen Schnitt durch ein solches Filterelement 2, wobei in den jeweiligen Figuren unterschiedliche Ausführungsformen des Filterelementes 2 dargestellt sind. Hierbei sind in diesen Figuren die erste Seite 12 sowie die zweite Seite 13 in einem Ausschnitt gezeigt. Dabei ist zu beobachten, dass der Filterkörper 10 bzw. das Filtermaterial 11 Hohlräume bzw. Poren 14 aufweist, die nachfolgend als Körperporen 14 bezeichnet werden, wobei in den jeweiligen Figuren rein exemplarisch kreisförmige Körperporen 14 dargestellt sind. Der Filterkörper 10 bzw. das Filtermaterial 11 weist also eine Porosität auf, die das Verhältnis des Hohlraumanteils bzw. Körperporenanteils zum Gesamtanteil des Filterkörpers 10 bzw. des Filtermaterials 11 angibt. Hierbei ist zu beobachten, dass die Porosität auf der ersten Seite 12 kleiner ist als auf der zweiten Seite 13.

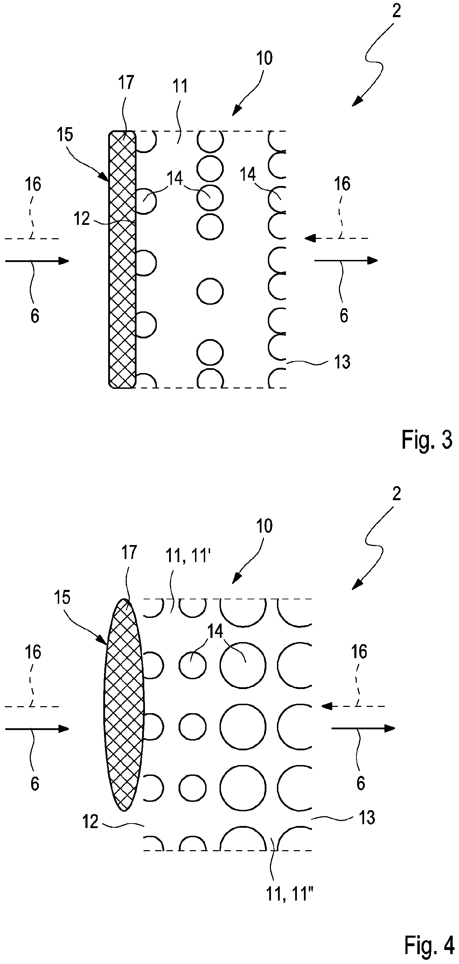

Bei der in der Figur 2 gezeigten Ausführungsform ist die kleinere Porosität auf der ersten Seite 12 im Vergleich zur zweiten Seite 13 dadurch realisiert, dass die Größe der Körperporen 14 bei gleicher Anzahl von der ersten Seite 12 hin zur zweiten Seite 13 kontinuierlich zunimmt, was zu einer kontinuierlichen Zunahme der Porosität von der ersten Seite 12 hin zur zweiten Seite 13 führt. Bei der in Figur 3 gezeigten Ausführungsform sind die jeweiligen Körperporen 14 gleich groß ausgebildet, während die Anzahl der Körperporen 14 von der ersten Seite 12 hin zur zweiten Seite 13 kontinuierlich zunimmt. Damit nimmt also die Porosität von der ersten Seite 12 hin zur zweiten Seite 13 kontinuierlich zu.

Bei der in Figur 4 gezeigten Ausführungsform weist der Filterkörper 10 zwei unterschiedlich große Sorten von Körperporen 14 auf. Dabei sind die kleineren Körperporen 14 im Bereich der ersten Seite 12 angeordnet, während die größeren Körperporen 14 im Bereich der zweiten Seite 13 angeordnet sind. Dies kann beispielsweise dadurch bedingt sein, dass der Filterkörper 10 im Bereich der ersten Seite 12 aus einem anderen Filtermaterial 11' hergestellt ist, als im Bereich der zweiten Seite 13, das aus einem anderen Filtermaterial 11" hergestellt ist. Damit weist das im Bereich der ersten Seite 12 vorhandene Filtermaterial 11' kleinere Körperporen 14 auf, während das andere Filtermaterial 11", welches im Bereich der zweiten Seite 13 angeordnet ist, größere Körperporen 14 aufweist. Somit ist die Porosität auch hier auf der ersten Seite 12 kleiner als auf der zweiten Seite 13.

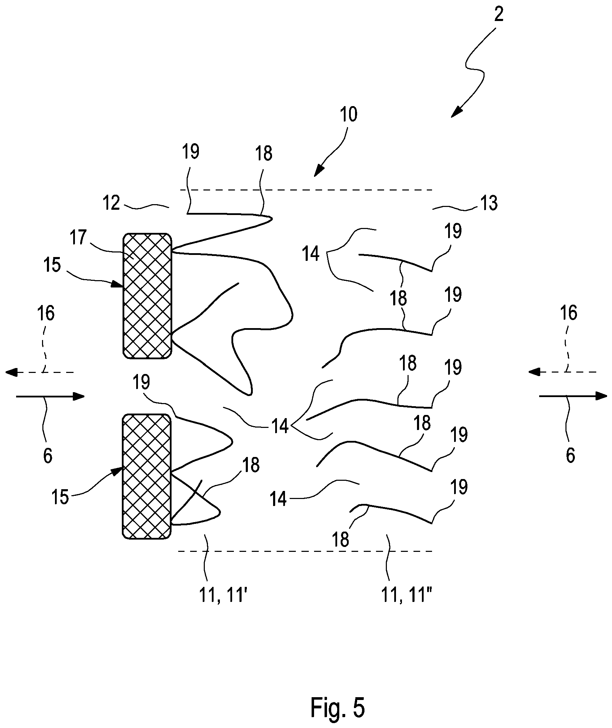

Figur 5 zeigt ein weiteres Ausführungsbeispiel, bei dem auf der ersten Seite 12 und auf der zweiten Seite 13 unterschiedliche Filtermaterialen 11', 11" zum Einsatz kommen. Beide Filtermaterialien 11', 11" weisen hierbei Fasern 18 auf, wobei das Filtermaterial 11' an der erste Seite 12 weniger freie Faserenden 19 aufweist als das Filtermaterial 11" an der zweiten Seite 13. Dies führt auch dazu, dass die Porosität bzw. die Anzahl der Körperporen 14 an der ersten Seite 12 11 kleiner als an der zweiten Seite 13 ist..

Die kleinere Porosität des Filterkörpers 10 auf der ersten Seite 13 im Vergleich zur zweiten Seite 13 führt insgesamt dazu, dass die erste Seite 12 glatter bzw. flacher sowie stabiler ausgebildet ist als die zweite Seite 13. Mit anderen Worten: Die Oberfläche der ersten Seite 12 ist glatter bzw. flacher sowie stabiler als die Oberfläche der zweiten Seite 13.

Erfindungsgemäß ist auf der ersten Seite 12 zumindest bereichsweise eine Nanofaserschicht 15 aufgebracht. Dies hat den Vorteil, dass die Nanofaserschicht 15 auf der ersten Seite 12, welche die niedrigere Porosität aufweist, eine glattere bzw. flachere Oberfläche vorfindet, so dass sie einfacher auf der ersten Seite 12 aufgebracht werden kann. Zudem wird die Nanofaserschicht 15 auf der ersten Seite 12 besser abgestützt, so dass sie belastbarer ist. Das heißt, dass die Nanofaserschicht 15 höheren Strömungsgeschwindigkeiten des zu filternden Fluids standhalten kann. Damit ist die Nanofaserschicht 15 auch mechanisch belastbarer, so dass die Verunreinigungen bzw. Schmutzpartikeln des zu reinigenden Fluids mit höheren Impulsen auf die Nanofaserschicht 15 auftreffen können, ohne diese zu beschädigen oder zu zerstören.

Die Nanofaserschicht 15 sowie das Filtermaterial 11 dienen dem Filtern des zu reinigenden Fluids. Bei der gezeigten Anordnung des Filterelementes 2 der Filtereinrichtung 1 erfolgt das Filtern des Fluids aufgrund der Anordnung der Nanofaserschicht bzw. der niedrigeren Porosität der ersten Seite 12 vorwiegend im Bereich der ersten Seite 12 statt, so dass die Schmutzpartikel des Fluids bzw. die Verunreinigungen des Fluids vorwiegend im Bereich der ersten Seite 12 abgeschieden werden. Bei der gezeigten Anordnung des Filterelementes 2 kann das Filterelement 2 also als Oberflächenfilter bezeichnet werden. Dabei ist es möglich, das Filterelement 2 zu reinigen, indem das Filterelement 2 mit einem Reinigungsfluid gereinigt wird, das das Filterelement 2 in zur Strömungsrichtung 6 entgegengesetzter Richtung 16 durchströmt. Damit ist es möglich, die im Bereich der ersten Seite 12 abgeschiedenen Schmutzpartikel bzw. Verunreinigungen des zu reinigenden Fluids aus dem Filterelement 2 hinauszuspülen. Hierdurch wird die Lebensdauer des Filterelementes 2 erhöht und/oder die Filterwirkung bzw. Wirkungsgrad des Filterelements 2 verbessert.

Die Nanofaserschicht 15 weist Nanofasern auf, die üblicherweise Durchmesser von einigen hundert Nanometern oder weniger aufweisen. Hierbei ist die erste Seite 12 zumindest bereichsweise mit der Nanofaserschicht 15 bedeckt. Die in Figur 3 gezeigte Ausführungsform zeigt eine Variante, bei der im gezeigten Ausschnitt eine solche Nanofaserschicht 15 aufgebracht ist, die eine vollflächige Überdeckung des Filtermaterials 11 aufweist. Bei den in den Figuren 2 und 5 gezeigten Ausführungsformen sind hingegen zwei solche Nanofaserschichten 15 gezeigt, die voneinander beabstandet auf der ersten Seite 12 aufgebracht sind und die Oberfläche des Filterkörpers 10 bzw. des Filtermaterials 11 segmentartig überdecken. Figur 4 zeigt ebenfalls eine solche Nanofaserschicht 15, welche die Oberfläche des Filterkörpers 10 nur in einem Teilbereich überdeckt, wobei der Randbereich des Filterkörpers 10 nicht von der Nanofaserschicht 15 überdeckt ist.

Die jeweilige Nanofaserschicht 15 weist ebenfalls eine Porosität auf, die durch in der Nanofaserschicht angeordnete Poren 17, die nachfolgend als Nanofaserporen 17 bezeichnet werden, bedingt ist. Hierbei weist die jeweilige Nanofaserschicht 15 in den gezeigten Ausführungsformen rein exemplarisch eine konstante Porosität auf, wobei auch Nanofaserschichten 15 mit variierenden Porositäten zum Einsatz kommen können. Zu beobachten ist ferner, dass die Nanofaserporen 17 der jeweiligen Nanofaserschicht 15 kleiner sind als die Körperporen 14 des Filterkörpers 10. Somit weisen die jeweiligen Nanofaserschichten 15 eine kleinere Porosität auf als die zugehörigen Filterkörper 10. Damit ist es insbesondere möglich, mit Hilfe der Nanofaserschicht 15 kleinere Schmutzpartikel aus dem zu filternden Fluid abzuscheiden als mit dem Filterkörper 10.

Die jeweilige Nanofaserschicht 15 kann aus einem beliebigen Material hergestellt sein. Auch kann der jeweilige Filterkörper 10 aus einem beliebigen Filtermaterial 11 bzw. beliebigen unterschiedlichen Filtermaterialien 11 hergestellt sein. Der Filterkörper 10 kann insbesondere aus einem faserhaltigen Filtermaterial 11 hergestellt sein. Beispielsweise hierfür sind zellulosehaltige Filtermaterialien 11 und/oder ein Fasergemisch aus Zellulose und synthetischen Fasern 18 und/oder Glasfasern 18.

## Patentansprüche

1. Filterelement (2) für eine Filtereinrichtung (1) mit einem Filterkörper (10) zum Filtern eines Fluids, der zumindest ein Filtermaterial (11) aufweist, wobei
- der Filterkörper (10) eine erste Seite (12) und eine von der ersten Seite (12) abgewandte zweite Seite (13) aufweist,
- eine Porosität des Filterkörpers (10) auf der ersten Seite (12) kleiner ist als auf der zweiten Seite (13),
- auf der ersten Seite (12) zumindest bereichsweise eine Nanofaserschicht (15) aufgebracht ist.

2. Filterelement nach Anspruch 1,
**dadurch gekennzeichnet,**
**dass** eine Durchschnittsgröße von Körperporen (14) des Filterkörpers (10) an der ersten Seite (12) kleiner ist als die Durchschnittsgröße der Körperporen (14) an der zweiten Seite.

3. Filterelement nach Anspruch 1 oder 2,
**dadurch gekennzeichnet,**
**dass** die Porosität des Filterkörpers (10) von der ersten Seite (12) hin zur zweiten Seite (13) zumindest bereichsweise stufenartig zunimmt.

4. Filterelement nach einem der Ansprüche 1 bis 3,
**dadurch gekennzeichnet,**
**dass** die Porosität des Filterkörpers (10) von der ersten Seite (12) hin zur zweiten Seite (13) zumindest bereichsweise kontinuierlich zunimmt.

5. Filterelement nach einem der Ansprüche 1 bis 4,
**dadurch gekennzeichnet,**
**dass** der Filterkörper (10) aus einem faserhaltigen Filtermaterial (11) und/oder aus einem zellulosehaltigen Filtermaterial (11) hergestellt ist.

6. Filterelement nach einem der Ansprüche 1 bis 5,
**dadurch gekennzeichnet,**
**dass** der Filterkörper (10) aus einem das Filtermaterial (11) des Filterkörpers (10) enthaltenden Filtermaterialflüssigkeit geschöpft oder gesiebt ist.

7. Filterelement nach einem der Ansprüche 1 bis 6,
**dadurch gekennzeichnet,**
**dass** die auf der ersten Seite (12) aufgebrachte Nanofaserschicht (15) eine kleinere Porosität aufweist als die erste Seite (12) des Filterkörpers (10).

8. Filterelement nach Anspruch 7,
**dadurch gekennzeichnet,**
**dass** Nanofaserporen (17) der Nanofaserschicht (15) kleiner sind als die Körperporen (14) des Filterkörpers (10).

9. Filterelement nach einem der Ansprüche 5 bis 8,
**dadurch gekennzeichnet,**
**dass** eine Anzahl von Faserenden (19) an der ersten Seite (12) kleiner ist an der zweiten Seite (13).

10. Filterelement nach Anspruch 9,
**dadurch gekennzeichnet,**
**dass** die Anzahl der Faserenden (19) an der ersten Seite (12) durch eine Vorbehandlung, insbesondere durch Ätzen, reduziert ist.

11. Filterelement nach Anspruch 9 oder 10,
**dadurch gekennzeichnet,**
**dass** die Anzahl der Faserenden (19) an der ersten Seite (12) durch die Verwendung eines anderen Filtermaterials (11) als an der zweiten Seite reduziert ist.

12. Filterelement nach einem der Ansprüche 9 bis 11,
**dadurch gekennzeichnet,**
**dass** an der ersten Seite (12) ein Filtermaterial (11) mit weicheren und/oder stärker abgerundeten Fasern (18) angeordnet ist als an der zweiten Seite (13).

13. Filterelement nach einem der Ansprüche 9 bis 12,
**dadurch gekennzeichnet,**
**dass** das Filtermaterial (11) an der ersten Seite (12) Filament, insbesondere Endlosfaser, aufweist.

14. Filtereinrichtung (1) zum Filtern eines Fluids, mit einem Gehäuse (3) und einem Filterelement (2) nach einem der Ansprüche 1 bis 13, das im Gehäuse (3) angeordnet ist.

15. Filtereinrichtung nach Anspruch 14,
**dadurch gekennzeichnet,**
**dass** die erste Seite (12) des Filterelements (2) einer von dem zu filternden Fluid angeströmten Rohseite (7) entspricht.

## Claims

1. A filter element (2) for a filter device (1), the filter element (2) having a filter body (10) for filtering a fluid, which comprises at least one filter material (11), wherein
- the filter body (10) has a first side (12) and a second side (13) facing away from the first side (12),
- the porosity of the filter body (10) is lower on the first side (12) than on the second side (13),
- a nano-fiber layer (15) is applied on at least some sections of the first side (12).

2. The filter element according to claim 1,
**characterized in**
**that** an average size of body pores (14) of the filter body (10) on the first side (12) is smaller than the average size of the body pores (14) on the second side.

3. The filter element according to claim 1 or 2,
**characterized in**
**that** the porosity of the body (10) increases in steps from the first side (12) towards the second side (13) at least in some sections.

4. The filter element according to any one of claims 1 to 3,
**characterized in**
**that** the porosity of the filter body (10) increases continuously from the first side (12) towards the second side (13) at least in some sections.

5. The filter element according to any one of claims 1 to 4,
**characterized in**
**that** the filter body (10) is made from a fibercontaining filter material (11) and/or from a cellulose-containing filter material (11).

6. The filter element according to any one of claims 1 to 5,
**characterized in**
**that** the filter body (10) is skimmed or screened from a filter material liquid containing the filter material (11) of the filter body (10).

7. The filter element according to any one of claims 1 to 6,
**characterized in**
**that** the nano-fiber layer (15) applied on the first side (12) has a lower porosity than the first side (12) of the filter body (10).

8. The filter element according to claim 7,
**characterized in**
**that** nano-fiber pores (17) of the nano-fiber layer (15) are smaller than the body pores (14) of the filter body (10).

9. The filter element according to any one of claims 5 to 8,
**characterized in**
**that** the number of fiber ends (19) on the first side (12) is smaller than on the second side (13).

10. The filter element according to claim 9,
**characterized in**
**that** the number of fiber ends (19) on the first side (12) is reduced by a pre-treatment, in particular by etching.

11. The filter element according to claim 9 or 10,
**characterized in**
**that** the number of fiber ends (19) on the first side (12) is reduced by using a different filter material (11) than on the second side.

12. The filter element according to any one of claims 9 to 11,
**characterized in**
**that** on the first side (12) a filter material (11) is arranged that has softer and/or more rounded fibers (18) than on the second side (13).

13. The filter element according to any one of claims 9 to 12,
**characterized in**
**that** the filter material (11) on the first side (12) comprises a filament, in particular a continuous filament.

14. A filter device (1) for filtering a fluid, comprising a housing (3) and a filter element (2) according to any one of claims 1 to 13, the filter element (2) is arranged in the housing (3).

15. The filter device according to claim 14,
**characterized in**
**that** the first side (12) of the filter element (2) corresponds to a dirty side (7) against which the fluid to be filtered flows.

## Revendications

1. Elément de filtre (2) pour un dispositif de filtre (1) avec un corps de filtre (10) pour la filtration d'un fluide qui présente au moins un matériau de filtration (11), dans lequel
- le corps de filtre (10) présente un premier côté (12) et un second côté (13) éloigné du premier côté (12),
- une porosité du corps de filtre (10) sur le premier côté (12) est inférieure à celle sur le second côté (13),
- sur le premier côté (12) une couche de nanofibres (15) est appliquée au moins par endroits.

2. Elément de filtre selon la revendication 1,
**caractérisé en ce**
**qu'**une grandeur moyenne de pores de corps (14) du corps de filtre (10) au niveau du premier côté (12) est inférieure à la grandeur moyenne des pores de corps (14) au niveau du second côté.

3. Elément de filtre selon la revendication 1 ou 2,
**caractérisé en ce**
**que** la porosité du corps de filtre (10) augmente au moins par endroits progressivement du premier côté (12) vers le second côté (13).

4. Elément de filtre selon l'une des revendications 1 à 3,
**caractérisé en ce**
**que** la porosité du corps de filtre (10) augmente au moins par endroits en continu du premier côté (12) vers le second côté (13).

5. Elément de filtre selon l'une des revendications 1 à 4,
**caractérisé en ce**
**que** le corps de filtre (10) est fabriqué en un matériau de filtration (11) contenant des fibres et/ou en un matériau de filtration (11) contenant de la cellulose.

6. Elément de filtre selon l'une des revendications 1 à 5,
**caractérisé en ce**
**que** le corps de filtre (10) est écopé ou tamisé à partir d'un liquide de matériau de filtration contenant le matériau de filtration (11) du corps de filtre (10).

7. Elément de filtre selon l'une des revendications 1 à 6,
**caractérisé en ce**
**que** la couche de nanofibres (15) appliquée sur le premier côté (12) présente une porosité inférieure à celle du premier côté (12) du corps de filtre (10).

8. Elément de filtre selon la revendication 7,
**caractérisé en ce**
**que** des pores de nanofibres (17) de la couche de nanofibres (15) sont inférieurs aux pores de corps (14) du corps de fibre (10).

9. Elément de filtre selon l'une des revendications 5 à 8,
**caractérisé en ce**
**qu'**un nombre d'extrémités de fibre (19) au niveau du premier côté (12) est inférieur à celui au niveau du second côté (13).

10. Elément de filtre selon la revendication 9,
**caractérisé en ce**
**que** le nombre des extrémités de fibre (19) au niveau du premier côté (12) est réduit par un prétraitement, en particulier par gravure.

11. Elément de filtre selon la revendication 9 ou 10,
**caractérisé en ce**
**que** le nombre des extrémités de fibres (19) au niveau du premier côté (12) est réduit par l'utilisation d'un autre matériau de filtration (11) par rapport à celui au niveau du second côté.

12. Elément de filtre selon l'une des revendications 9 à 11,
**caractérisé en ce**
**qu'**un matériau de filtration (11) avec des fibres plus molles et/ou arrondies plus fortement (18) est agencé au niveau du premier côté (12) par rapport à celui au niveau du second côté (13).

13. Elément de filtre selon l'une des revendications 9 à 12,
**caractérisé en ce**
**que** le matériau de filtration (11) présente au niveau du premier côté (12) un filament, en particulier une fibre continue.

14. Dispositif de filtre (1) pour la filtration d'un fluide, avec un boîtier (3) et un élément de filtre (2) selon l'une des revendications 1 à 13, qui est agencé dans le boîtier (3).

15. Dispositif de filtre selon la revendication 14,
**caractérisé en ce**
**que** le premier côté (12) de l'élément de filtre (2) correspond à un côté produit brut (7) soufflé par le fluide à filtrer.
